# EUROPEAN PATENT APPLICATION

(11) **EP 3 882 460 A1**
(43) Date of publication of application: **22.09.2021**
(21) Application number: 20382198.8
(22) Date of filing: 16.03.2020
(51) Int. Cl.: F03D 15/00

(54) **WIND TURBINE GEARBOX STABILIZER**

(71) Applicant: SIEMENS GAMESA RENEWABLE ENERGY INNOVATION & TECHNOLOGY, S.L., 31621 Sarriguren (Navarra) (ES)
(72) Inventor: Cerrada Garate, Javier, 31006 Pamplona (ES); Repiso Barrera, Roberto, 20013 Donostia (ES); Albizua Macua, Juan, 31012 PAMPLONA (ES)
(74) Representative: Aspacher, Karl-Georg

(57) **Abstract**

The invention describes a wind turbine gearbox stabilizer (1) comprising a torsion spring (10) comprising a base bar (10B) and two side bars (10S); a torsion spring mount (10M) realised to rotatably connect the base bar (10B) to a bedframe (23); a first lever arm (11) shaped to extend between the first side bar (10S) and an attachment mount (222M) on one side of the gearbox (222); and a second lever arm (11) shaped to extend between the second side bar (10S) and an attachment mount (222M) on the opposite side of the gearbox (222).

## Description

The invention describes a wind turbine gearbox stabilizer.

One common type of wind turbine design has a drive train with a gearbox between a low-speed shaft and a high-speed shaft. The gearbox converts the slow high-torque rotation of the low-speed shaft to the faster rotational speed to drive a generator. It is important to ensure that torque from the low-speed shaft is efficiently transferred to the high-speed shaft. To this end, it is necessary to provide a stable mount for the gearbox to prevent it from being turned by the very large turning moment that is exerted on the first stage of the gearbox. A known type of gearbox mount uses an arrangement of brackets extending from the gearbox housing - e.g. in a four-point or two-point arrangement - and bolted to corresponding bedframe brackets, with several shock absorbers in between opposing bracket faces.

However, the gearbox of a large wind turbine can weigh several tons, so that the known type of gearbox mounts are very massive components. Furthermore, the known types of gearbox mount are subject to very uneven loading. This is because a drivetrain shaft always turns in a specific direction (e.g. always clockwise), so that the gearbox mount on one side of the gearbox is always subject to a downward force, while the gearbox mount on the other side of the gearbox is always subject to an upward force. Such an asymmetric distribution of forces can lead to fatigue damage. Because a gearbox mount is generally realised as part of the gearbox housing, it is not easily replaced when damaged. The replacement of even relatively easily accessible components such as shock absorbers requires considerable downtime. Therefore, to avoid fatigue-related maintenance costs, the known types of generator mounts are usually very large and massive to ensure that their lifetime is at least as long as the gearbox lifetime.

It is therefore an object of the invention to provide an improved way of mounting such a gearbox to a bedframe.

This object is achieved by the gearbox stabilizer of claim 1; and by the wind turbine of claim 12.

According to the invention, the wind turbine gearbox stabilizer comprises a torsion spring comprising a base bar and two side bars; a torsion spring mount realised to rotatably connect the base bar to a bedframe; a first lever arm shaped to extend between the first side bar and an attachment mount on one side of the gearbox; and a second lever arm shaped to extend between the second side bar and an attachment mount on the opposite side of the gearbox.

The term "gearbox" shall be understood in its accepted sense as the component or block comprising a housing and its enclosed gear stages. In a wind turbine, the low-speed shaft enters the gearbox from the front, and the high-speed shaft exits at the rear of the gearbox.

The torsion spring of the inventive gearbox stabilizer can be visualized as a "square" U-shaped structure, with two parallel side bars extending essentially at right angles from the base bar. In other words, each side bar extends perpendicularly outward from one end of the base bar.

An advantage of the inventive gearbox stabilizer is that it converts the asymmetric turning moment of the low-speed shaft into symmetrical loads on either side of the gearbox. This is because of the U-shaped structure of the torsion bar. One side bar will be displaced downward by the turning moment of the low-speed shaft, which is transferred to that side bar via attachment point and lever arm. However, any downward displacement of one side bar will result in an essentially identical downward displacement of the other sidebar. The corrective force acting on that other sidebar is transferred via its lever arm and attachment point to the gearbox, resulting in an essentially complete suppression of any rotational movement of the gearbox. By converting the asymmetric turning moment of the low-speed shaft into symmetrical loads, the inventive gearbox stabilizer is effective at absorbing the forces acting on the gearbox and avoids fatigue damage. Furthermore, the inventive gearbox stabilizer is straightforward and economical in design, and favourably easy to install. The inventive gearbox stabilizer is therefore a favourably low-cost alternative compared to the expensive and massive gearbox mounting solutions known from the prior art.

According to the invention, the wind turbine comprises a drivetrain with an electrical generator, and a gearbox between a low-speed shaft and a high-speed shaft. The wind turbine also comprises a bedframe to support the drivetrain components. The bedframe and drivetrain components are installed inside a nacelle that is mounted at the upper level of a wind turbine tower. The inventive wind turbine further comprises an instance of the inventive gearbox stabilizer, installed so that the torsion spring mount is secured to the bedframe, and the lever arms are secured to attachment mounts on opposite sides of the gearbox.

An advantage of the inventive wind turbine is that maintenance costs associated with the gearbox stabilizer are favourably low, since the inventive gearbox stabilizer counteracts an asymmetric turning moment of the low-speed shaft by transforming it into symmetrical loads.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the wind turbine has a rated power output in the order of 1 - 5 megawatts. With rotor blade lengths in the order of 20 - 70 m or more, the turning moment of the low-speed shaft can be in the order of 5000 kNm. The aerodynamic rotor of such a large wind turbine generally turns at a speed of 10 - 30 rpm. The mass of the gearbox of such a wind turbine can be in the order of 20 - 40 metric tons. In a particularly preferred embodiment of the invention, therefore, the gearbox stabilizer is constructed to absorb loads in the order of 1000 - 2000 kN. The inventive gearbox stabilizer acts to minimize or eliminate torsional deflections and may therefore be referred to as a "torsional stabilizer" in the following.

The U-shaped torsion spring is preferably realised as a one-piece rod made of a material such as 51CrV4 steel with a shear strength in the order of 1000 MPa. The diameter of a torsion spring bar is at least 100 mm, more preferably at least 210 mm. Preferably, the torsion spring has an essentially constant circular cross-section over its length. The "corner" between a sidebar and the base bar can be moderately curved, with a suitable radius of curvature to ensure structural strength of the torsion spring.

The torsion spring mount ensures that the base bar can rotate about its longitudinal axis. For example, the torsion spring mount can comprise a number of brackets, each with a sleeve or cuff shaped to fit about the base bar, and a mounting interface for bolting or otherwise fastening the bracket to the bedframe. Preferably, a torsion spring mount comprises a cylindrical sleeve that has a low-friction surface in contact with the base bar. For example, the sleeve may be lined with a low-friction material so that the base bar can freely rotate within the torsion spring mount. In this way, any force acting to downwardly displace one sidebar is "mirrored" essentially immediately at the other sidebar.

An attachment mount for connecting the gearbox housing to a lever arm is preferably realised as a bracket assembly that protrudes essentially horizontally outward from the gearbox housing. The two attachment mounts are preferably arranged on opposite sides of the gearbox in a plane that contains the rotational axis of the gearbox, in other words the attachment mounts are on diametrically opposite sides of the gearbox.

In a preferred embodiment of the invention, the length of the base bar of the torsion spring preferably corresponds to the distance between two attachment points, so that the side bars can extend essentially parallel to the sides of the gearbox housing. In such a preferred embodiment, a lever arm may extend essentially vertically between the side bar and attachment mount on that side of the gearbox. This is to be understood to mean that the lever arm extends in a direction that is perpendicular to the sidebar. Such a construction is favourably efficient in transferring forces from one sidebar to the other, and is also favourably efficient in force transfer between lever arm and sidebar.

The lever arm can be realised in any suitable way. For example, a lever arm can be realised as a simple rod with a first end connector which can fit about a sidebar, and another end connector which can fit into the attachment mount. In a preferred embodiment of the invention, a lever arm is formed to have a relatively slender main body terminating in two outer end connectors or interfaces. In a preferred embodiment of the invention, the lever arm may be realised as a tie rod. An end connector to side bar and/or attachment mount can be realised as a ball joint.

Alternatively, an end connector may be shaped to accommodate an annular damper, for example an annular damper that fits about the end of a side bar. An annular damper can be made of an elastomer for absorbing angular deformations.

A drive train of a wind turbine with very long rotor blades is generally tilted at an angle (usually by about 3 - 7°) to the horizontal in order to avoid collisions between the rotor blades and the tower. This means that the rotational axis of the drivetrain is higher at the gearbox front end than at the gearbox rear end. The inventive gearbox stabilizer exploits this structural feature, since it is only necessary to secure the base bar at the bedframe level, and the front ends of the sidebars can be suspended above the bedframe level. It is not necessary for the sidebars or the lever arms to be attached in any way to the bedframe.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figures 1 - 4 show embodiments of the inventive gearbox stabilizer;
Figure 5 shows a wind turbine;
Figure 6 shows a prior art gearbox support arrangement.

In the diagrams, like numbers refer to like objects throughout. Objects in the diagrams are not necessarily drawn to scale.

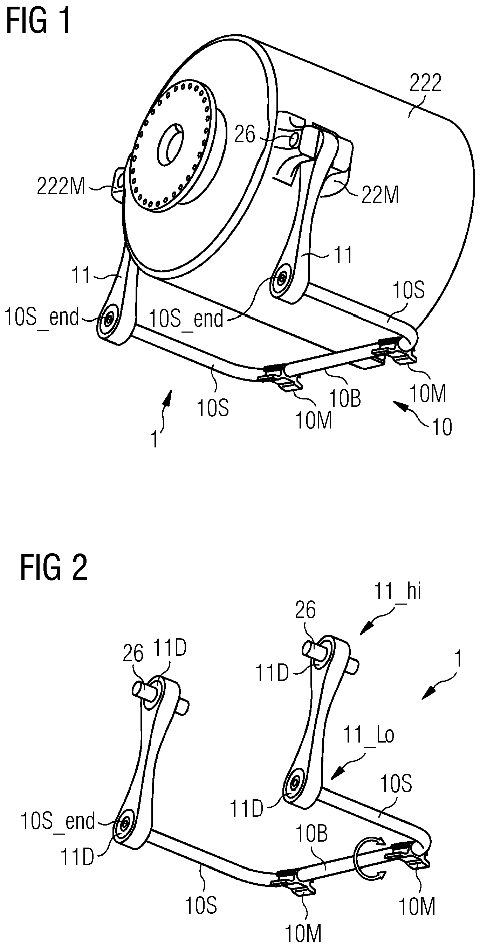

Figure 1 and Figure 2 show an embodiment of the inventive wind turbine gearbox stabilizer 1 or "torsional stabilizer" 1. The torsional stabilizer includes a torsion spring 10 comprising a base bar 10B and two side bars 10S formed as a "square U". The base bar 10B of the torsion spring is rotatably connected to a bedframe by means of a torsion spring mount 10M, i.e. the mount holds the base bar 10B in place while allowing it to rotate about its longitudinal axis as indicated in Figure 2. One each side of the gearbox 222 as shown in Figure 1, a lever arm 11 extends between a side bar 10S and an attachment mount 222M that is part of the gearbox housing.

The lower end 11_lo of a lever arm 11 is arranged to fit about the end 10S_end of a side bar 10S, and the upper end 11_hi of a lever arm 11 is realised to accommodate the shaft of an attachment mount bolt 26.

Figure 2 shows the torsional stabilizer 1 on its own, and the diagram indicates annular dampers 11D enclosed at the connection ends of each lever arm 11. This diagram also shows an attachment mount bolt 26 extending through the annular damper held in the upper end 11_hi of a lever arm 11.

Instead of the lever arm shape described in Figure 1 and 2 above, the lever arms may be realised as tie rods extending between the sidebars 10S and the attachment mounts 22M. In such an embodiment, the outer end of a sidebar 10S is realised for connection to the tie-rod by means of a ball-joint. Similarly, the attachment mount 22M can be realised for connection to the tie-rod by means of a ball-joint.

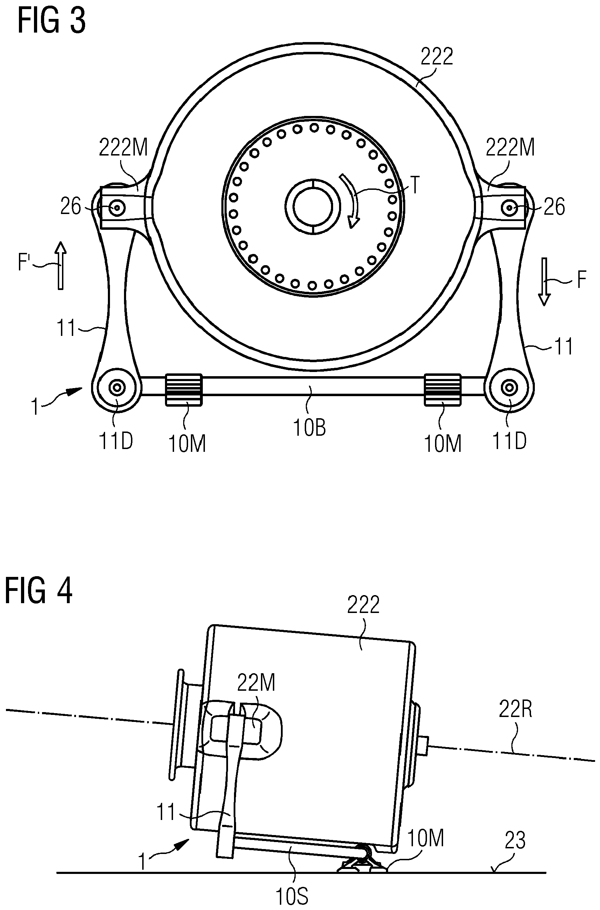

Figure 3 shows a front view of a gearbox 222 with an embodiment of the inventive torsional stabilizer 1. The diagram shows a preferred form for the lever arms 11 and also clearly shows the annular dampers 11D in place about the side bar ends and the mounting bolts 26. Figure 3 also illustrates the force transfer by the inventive torsional stabilizer 1. A low-speed shaft turning moment or torque T is indicated. Particularly when starting from an idle state, this torque can be very large. Its effect is transferred through the right-hand-side mount 222M as a downward force F through the right-hand-side lever arm 11, and through the left-hand-side mount 222M as an upward force F on the left-hand-side lever arm 11.

The downward force F through the right-hand-side lever arm 11 acts to downwardly displace the right-hand-side sidebar 10S. However, through the base bar 10B, the downward deflection "appears" as the same downward deflection on the left-hand-side sidebar 10S, i.e. so that forces in the left-hand-side lever arm 11 are effectively cancelled out.

Similarly, the upward force F' on the left-hand-side lever arm 11 acts to pull the left-hand-side sidebar 10S upwards, and this deflection "appears" as the same upward deflection on the right-hand-side sidebar 10S, so that forces in the right-hand-side lever arm 11 are effectively cancelled out.

Any slight imbalance of forces can be transferred through the base bar 10B, which is free to rotate within its mounts 10M, so that the torsional stabilizer 1 is not subject to great stresses during operation of the wind turbine.

Figure 4 shows a side view of a gearbox 222 equipped with an embodiment of the inventive torsional stabilizer 1. The diagram indicates the usual tilted orientation of a gearbox 222 installed in a large wind turbine, and also indicates the rotational axis 22R of the drivetrain. The slight angle of inclination is beneficial to the inventive torsional stabilizer 1, since the torsion bar mounting brackets 10M can be favourably compact while still allowing the front end of the gearbox to be suspended above the bedframe 23.

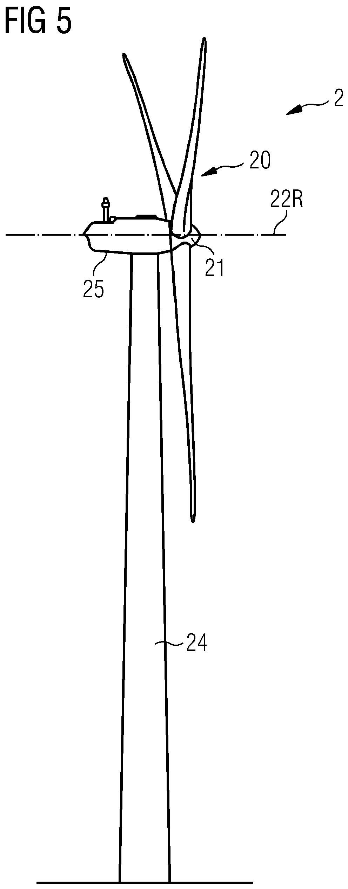

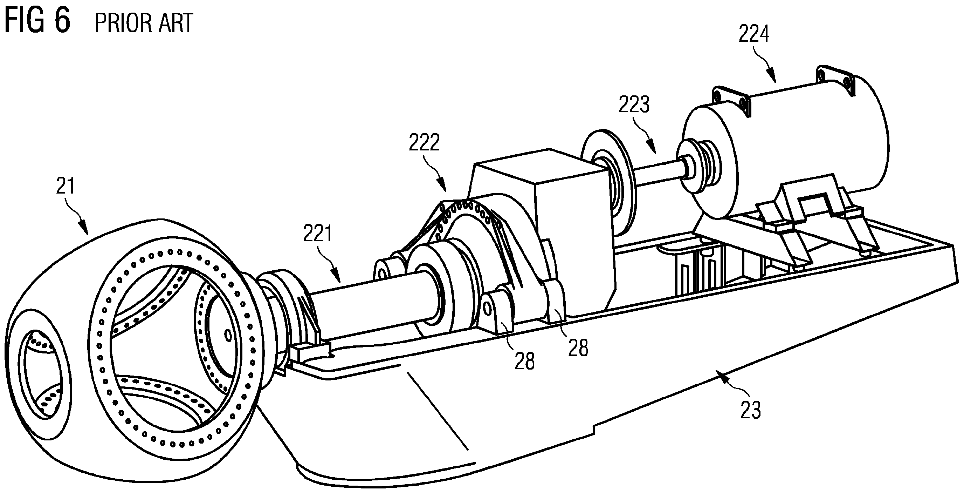

Fig 5 shows a wind turbine 2, and Figure 6 shows a prior art approach to securing a gearbox 222 to suppress unwanted movement that would be caused by the low-speed high-torque shaft 221. Figure 5 shows the aerodynamic rotor 20 and hub 22 and also the nacelle 25 and tower 24, while Figure 6 shows the drivetrain 22 with its relevant components, namely the low-speed shaft 221, gearbox 222, high-speed shaft 223, generator 224 and bedframe 23.

Figure 6 shows a typical 4-point mounting arrangement 28 as known from the prior art. The disadvantage of such an arrangement (and any similar arrangement based on the same principle) is that connectors and dampers are subject to great loads during operation of the wind turbine, and parts of the arrangement 28 can fail owing to fatigue damage. The inventive torsional stabilizer 1 shown in Figs 1 - 4 can be used instead of this type of prior art mounting arrangement.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A wind turbine gearbox stabilizer (1) comprising
- a torsion spring (10) comprising a base bar (10B) and two side bars (10S);
- a torsion spring mount (10M) realised to rotatably connect the base bar (10B) to a bedframe (23);
- a first lever arm (11) shaped to extend between the first side bar (10S) and an attachment mount (222M) on one side of the gearbox (222); and
- a second lever arm (11) shaped to extend between the second side bar (10S) and an attachment mount (222M) on the opposite side of the gearbox (222).

2. A wind turbine gearbox stabilizer according to claim 1, wherein a lever arm (11) extends essentially vertically between a side bar (10S) and an attachment mount (222M).

3. A wind turbine gearbox stabilizer according to claim 1 or claim 2, wherein the lower end (11 lo) of a lever arm (11) is realised for connection to the end (10S_end) of a side bar (10S) .

4. A wind turbine gearbox stabilizer according to any of the preceding claims, wherein the upper end (11_hi) of a lever arm (11) is realised for connection to an attachment mount (222M).

5. A wind turbine gearbox stabilizer according to any of the preceding claims, comprising a ball-joint at the connection between a lever arm (11) and a side bar (10S) and/or at the connection between a lever arm (11) and an attachment mount (222M).

6. A wind turbine gearbox stabilizer according to any of the preceding claims, comprising a damper (11D) at the connection between a lever arm (11) and a side bar (10S) and/or at the connection between a lever arm (11) and an attachment mount (222M).

7. A wind turbine gearbox stabilizer according to any of the preceding claims, wherein the attachment mounts (222M) are on diametrically opposite sides of the gearbox (222).

8. A wind turbine gearbox stabilizer according to any of the preceding claims, wherein the torsion spring (10) is made of steel.

9. A wind turbine gearbox stabilizer according to any of the preceding claims, wherein the torsion spring (10) has an essentially constant circular cross-section over its length.

10. A wind turbine gearbox stabilizer according to any of the preceding claims, wherein the diameter of a torsion spring bar or pipe (10B, 10S) is at least 100 mm, more preferably at least 210 mm.

11. A wind turbine gearbox stabilizer according to any of the preceding claims, constructed to absorb loads in the order of 1000 - 2000 kN.

12. A wind turbine (2) comprising
- a drivetrain (22) with a generator (224) and a gearbox (222) between a low-speed shaft (221) and a high-speed shaft (223);
- a bedframe (23) to support the drivetrain (22); and
- a gearbox stabilizer (1) according to any of claims 1 to 11, wherein the torsion spring mount (10M) is secured to the bedframe (23), and the lever arms (11) are secured to attachment mounts (222M) on opposite sides of the gearbox (222) .

13. A wind turbine according to claim 12 wherein the mass of the gearbox (222) is in the order of 20 - 40 metric tons.
